# EUROPÄISCHE PATENTANMELDUNG

(11) **EP 1 777 159 A1**
(43) Veröffentlichungstag der Anmeldung: **25.04.2007**
(21) Anmeldenummer: 05022866.7
(22) Anmeldetag: 20.10.2005
(51) Int. Cl.: B64G 1/36, G01S 1/00

(54) **Anordnung und Verfahren zur Positions- und Lagebestimmung eines Flugkörpers, insbesondere eines Raumflugkörpers**

(71) Anmelder: Astrium GmbH, 81663 München (DE)
(72) Erfinder: Martin, Sven, Dr., 81925 München (DE); Dragon, Dieter, 86551 Aichach (DE)
(74) Vertreter: Hummel, Adam

(57) **Zusammenfassung**

Die Erfindung betrifft eine Anordnung zur Positions- und Lagebestimmung eines Flugkörpers (12, 14), insbesondere eines Raumflugkörpers umfassend
- ein Bodensegment (16), das mindestens eine, auf der Erdoberfläche befindliche Pseudolit-Station (18) aufweist, die ein eindeutig die Pseudolit-Station identifizierbares Navigationssignal (20) in Richtung des Weltraums aussendet, und
- ein Nutzersegment, das mindestens einen im Flugkörper (12, 14) angeordneten Sensor (46) aufweist, der zum Empfangen des Navigaüonssignals (20) der mindestens einen Pseudolit-Station (18) und zum Ermitteln seiner absoluten Position und Lage im Raum anhand des empfangenen Navigationssignals (20) ausgebildet ist.

## Beschreibung

Die Erfindung betrifft eine Anordnung zur Positions- und Lagebestimmung eines Flugkörpers, insbesondere eines Raumflugkörpers gemäß Anspruch 1 und ein entsprechendes Verfahren gemäß Anspruch 16.

Zur Bestimmung der Position und Lage von Raumflugkörpern wie Trägerraketen, deren Nutzlast, Satelliten und sonstigen exo- und transatmosphärischen Fluggeräten werden in der Regel Inertialnavigationssysteme und zum Teil auch zusätzliche Sensorik wie beispielsweise barometrische Sensoren eingesetzt, die in den Raumflugkörpern verbaut sind. Mit Lage ist die Lage/Orientierung des Raumflugkörpers im Raum gemeint, also Roll-, Nick- und Gier-Winkel, Derartige Systeme sind zwar von äußeren Einrichtungen und vor allem Signalen unabhängig, verursachen aber hohe Kosten. Außerdem liefern sie keine absoluten Positionsangaben eines Raumflugkörpers.

Aus der US 6,535,801 B1 ist es bekannt, die absolute Position und Lage eines Satelliten auf einer geosynchronen Bahn mittels GPS (Global Positioning System)-Signalen zu bestimmen. Da GPS-Satelliten derart ausgerichtet sind, dass ihre Hauptabstrahlrichtung für GPS-Signale zur Erde hin ausgerichtet ist, werden auf geosynchronen Bahnen, die über den Orbits von GPS-Satelliten liegen, im Mittel nur ein oder gar keines, höchstens jedoch drei GPS-Signale empfangen. Dies reicht für eine zuverlässige absolute Positions- und Lagebestimmung eines geosynchronen Satelliten in der Regel nicht aus. Daher wird vorgeschlagen, auch die in Nebenabstrahlrichtungen von den GPS-Satelliten ausgesandten, allerdings stark verrauschten GPS-Signale zu verarbeiten. Laut der US 6,535,801 B1 kann diese Verarbeitung beispielsweise dadurch ermöglicht werden, dass ein auf der Erde stationierter Pseudolit eingesetzt wird, dessen Signal fortwährend vom geosynchronen Satelliten empfangen und für eine hochgenaue GPS-Zeitreferenz im Empfänger des geosynchronen Satelliten verwendet wird. Nachteilig bei diesem Verfahren ist jedoch, dass Signale von GPS-Satelliten verwendet werden, die unter Kontrolle des Verteidigungsministeriums der Vereinigten Staaten von Amerika stehen und daher jederzeit abgeschaltet oder verschlechtert werden können.

Aufgabe der vorliegenden Erfindung ist es nun, eine Anordnung und ein Verfahren zur Positionsbestimmung eines Flugkörpers, insbesondere eines Raumflugkörpers vorzuschlagen, die eine absolute Positionsbestimmung erlauben und möglichst unabhängig von GPS-Signalen sind.

Diese Aufgabe wird durch eine Anordnung zur Positionsbestimmung eines Raumflugkörpers mit den Merkmalen nach Anspruch 1 und ein entsprechendes Verfahren mit den Merkmalen nach Anspruch 16 gelöst. Bevorzugte Ausgestaltungen der Erfindung ergeben sich aus den abhängigen Ansprüchen.

Ein wesentlicher Gedanke der Erfindung besteht darin, mindestens eine Pseudolit (Abkürzung für Pseudo-Satellit)-Station auf der Erdoberfläche vorzuschlagen, die in Richtung des Weltraums, d.h. des erdnahen Raums außerhalb der Erdatmosphäre sowie des interplanetaren und mittels Raumfahrt erreichbaren Raums, ein die Station eindeutig identifizierbares Navigationssignal aussendet. Von einem Flugkörper wie beispielsweise einer Rakete kann dann das von der Pseudolit-Station ausgesandte Navigationssignal empfangen und anhand dessen seine absolute Position im Raum bestimmt werden, entweder ausschließlich aufgrund empfangener Navigationssignale von mehreren Pseudolit-Stationen oder im Zusammenspiel mit vorhandenen Intertialnavigationsystemen oder weiteren Navigaüvnssignalen von Satelliten. Durch den Einsatz einer derartigen Pseudolit-Station können die eingangs geschilderten Nachteile der Positionsbestimmung mittels Satelliten im Wesentlichen vermieden werden, insbesondere Empfangsprobleme von Navigationssignalen in größeren Höhen als den Orbits von Navigationssatelliten.

Bisher wurden Pseudolit-Stationen zur Verbesserung der Navigationsgenauigkeit auf der Erdoberfläche eingesetzt und sendeten daher ihre Navigationssignale nur im Bereich der Erdoberfläche aus, um optimal von Navigationssignalempfängem auf der Erdoberfläche oder in der Nähe davon empfangen werden zu können. Durch das Aussenden eines Navigationssignals einer Pseudolit-Station in Richtung des Weltraums gemäß der vorliegenden Erfindung wird nun die Möglichkeit geschaffen, die absolute Position von Flugkörpern auch in sehr großen Höhen, insbesondere von Raumflugkörpern wie beispielsweise Raketen oder auch geosynchronen Satelliten zu ermitteln.

Die Erfindung kann alleine oder auch zusätzlich zu in Flugkörpern vorhandenen Inertialnavigationssystemen eingesetzt werden, um eine besonders genaue und vor allem absolute Positions- und Lagebestimmung zu ermöglichen. Beispielsweise können Betreiber von Raketenstartrampen die Erfindung einsetzen, um unabhängig von Betreibem von Satellitennavigationssystemen zu sein und eine vollständige Kontrolle über das System zur absoluten Positions- und Lagebestimmung von Raketen zu behalten. Die Erfindung eignet sich für jede Art von Flugkörper und insbesondere für Anwendungen, bei denen herkömmliche Navigationssysteme wie GPS oder GLONASS bzw, GNSS (Global Navigation Satellite System) zu ungenau, aufgrund einer großen Flughöhe nicht geeignet oder auch zu unzuverlässig sind, Schließlich ist die Erfindung auch kostengünstiger im Flugkörper implementierbar als die derzeit für die Positions- und Lagebestimmung vorhandene Avionik.

Die Erfindung betrifft nun gemäß einer Ausführungsform eine Anordnung zur Positionsbestimmung eines Flugkörpers , insbesondere eines Raumflugkörpers umfassend
- ein Bodensegment, das mindestens eine, auf der Erdoberfläche befindliche Pseudolit-Station aufweist, die ein eindeutig die Pseudolit-Station identifizierbares Navigationssignal in Richtung des Weltraums aussendet, und
- ein Nutzersegment, das mindestens einen im Flugkörper angeordneten Sensor aufweist, der zum Empfangen des Navigationssignals der mindestens einen Pseudolit-Station und zum Ermitteln seiner absoluten Position im Raum anhand des empfangenen Navigationssignals ausgebildet ist. Mit einer derartigen Anordnung lässt sich die Position eines Flugkörpers weitgehend unabhängig von Satellitennavigationssystemen ermitteln, zumindest aber die Genauigkeit der Positionsermittlung mittels Satellitennavigatonssignalen wesentlich verbessern. Die Anordnung kann auch als Rückfalllösung für die Positionsbestimmung dienen, wenn beispielsweise ein Inertialnavigationssystem eines Flugkörpers ausfällt oder eine Satelliten-basierte Navigation aufgrund schlechten Navigationssignalempfangs unbrauchbar wird.
   Um die Genauigkeit der Positionsbestimmung zu erhöhen und vor allem eine möglichst genaue Positionsbestimmung in verschiedenen Höhen des Flugkörpers und Flugphasen zu ermöglichen, kann das Bodensegment mehrere Pseudolit-Stationen umfassen, die gemäß einer vorgegebenen Geometrie auf der Erdoberfläche derart angeordnet sind, dass während aller Phasen eines Flugs des Flugkörpers Navigationssignale von mindestens fünf unterschiedlichen Pseudolit-Stationen empfangen werden können. Dadurch kann die Position mit einer Genauigkeit ermittelt werden, die insbesondere für kritische Missionen wie den Start und Flug einer Trägerrakete für Satelliten ausreichend und zumindest teilweise zuverlässiger als eine auf Satellitennavigationssignalen basierende Positionsbestimmung ist.
   Da die Positionsbestimmung vor allem in kritischen Flugphasen wie dem Start mit einer besonders hohen Genauigkeit erforderlich ist, können die Pseudolit-Stationen ferner derart angeordnet sein, dass während des Starts des Flugkörpers von der Erdoberfläche Navigationssignale einer maximalen Anzahl von Pseudolit-Stationen empfangen werden können. Beispielsweise können im Bereich einer Raketenstartrampe mehrere Pseudolit-Stationen in kurzen Abständen untereinander angeordnet sein, so dass eine startende Trägerrakete mit hoher Wahrscheinlichkeit Navigationssignale sehr vieler Pseudolit-Stationen empfängt und daraus seine absolute Position im Raum mit hoher Genauigkeit ermitteln Kann.
   Die Erfindung betrifft gemäß einer weiteren Ausführungsform eine Pseudolit-Station zur Verwendung in einer Anordnung gemäß der Erfindung, umfassend
- einen Signalgenerator, der zum Erzeugen eines eindeutig die Pseudolit-Station identifizierbaren Navigationssignals und zum Aussenden des Navigationssignals mittels eines Codemultiplexverfahrens ausgebildet ist, und
- eine Sendeantenne zum Aussenden des Codemultiplexsignals,
wobei der Signalgenerator als Spreizkode einen der Pseudolit-Station zugeordneten eindeutigen Kode verwendet.
Im Prinzip kann eine Pseudolit-Station ähnlich wie ein Navigationssatellit aufgebaut sein, mit dem Unterschied, dass sie eine fest vorgegebene Position auf der Erdoberfläche besitzt und ihre Navigationssignale in den Weltraum hinaus sendet, und nicht zur Erdoberfläche hin wie ein Satellit.

Insbesondere kann eine Steuerungs- und Überwachungseinheit vorgesehen sein, die zum Steuern der Navigationssignalerzeugung und zum Überwachen des Aussendens eines Navigationssignals in Übereinstimmung mit Daten einer Zeitreferenz ausgebildet ist.

Um zu gewährleisten, dass mehrere Pseudolit-Stationen ihre Navigationssignale basierend auf einer möglichst synchronen Zeitbasis aussenden, kann eine Monitorstation zur Überwachung der Pseudolit-Station vorgesehen sein, die zum Empfangen von Navigationssignalen von Satelliten und zum Erzeugen von Synchronisationssignalen für die Steuerungs- und Überwachungseinheit der Pseudolit-Station aus den empfangenen Navigationssignalen ausgebildet ist. Aufgrund der Erdkrümmung ist eine zentrale Synchronisation der Pseudolit-Station schwierig, wenn nicht gar unmöglich. Daher ist es vorteilhaft, wenn eine Synchronisation über Satellitennavigationssignale erfolgt, die von den Pseudolit-Stationen problemlos empfangen werden können.

Vor allem kann die Monitorstation ausgebildet sein, um aus empfangenen Navigationssignalen von Satelliten Zeitinformationen zu extrahieren und für die Erzeugung der Synchronisationssignale zu verwenden. Mit anderen Worten kann also die Monitorstation einer Pseudolit-Station externe Satellitennavigationssignale als Zeitreferenz benutzen.

Alternativ oder zusätzlich kann die Monitorstation auch ausgebildet sein, um mittels eines Zweiwege-Zeitübertragungsverfahren Zeitinformationen zu erhalten und für die Erzeugung der Synchronisationssignale zu verwenden.

Eine Pseudolit-Station kann auch eine hochstabile Oszillatorreferenz als lokale Zeitbasis aufweisen, wodurch sie bis zu einem gewissen Grad autonom, d.h. insbesondere unabhängig von externen Signalen wie Satellitennavigationssignalen arbeiten kann.

Die Erfindung betrifft gemäß einer weiteren Ausführungsform einen Sensor zur Verwendung in einer Anordnung gemäß der Erfindung umfassend
- mindestens eine Antenne und mindestens einen Empfänger zum Empfangen eines Navigationssignalen mindestens einer Pseudolit-Station und
- Verarbeitungs- und Berechnungsmittel zum Verarbeiten des empfangenen Navigationssignals und Berechnen der absoluten Position und Lage des Sensors aus dem verarbeiteten Navigativnssignal. Ein derartiger Sensor kann beispielsweise als Einheit ausgebildet sein, die in verschiedenen Flugkörpern, wie beispielsweise Trägerraketen, deren Nutzlast, Satelliten und sonstigen exo- und transatmosphärischen Fluggeräten eingebaut werden kann, um eine absolute Positionsbestimmung des Flugkörpers gemäß der Erfindung zu ermöglichen.
   Die mindestens eine Antenne und der mindestens eine Empfänger können zusätzlich zum Empfangen von Navigationssignalen von Satelliten ausgebildet sein. Dadurch kann die Genauigkeit der Positionsbestimmung weiter verbessert, teilweise sogar erhöht werden, Empfangene Satellitennavigationssignale können beispielsweise direkt in die Positionsbestimmung eingehen oder auch zum Plausibilisieren von einer bereits anhand der Navigationssignale von Pseudolit-Stationen ermittelten Position dienen.
   Eine weitere Verbesserung der Positionsbestimmung kann dadurch erreicht werden, dass die Verarbeitungs- und Berechnungsmittel zusätzlich zum Verarbeiten von Daten eines Inertialnavigationssystems eines Flugkörpers und Berücksichtigen der Daten des Inertialnavigationssystems beim Berechnen der absoluten Position und Lage des Sensors aus den verarbeiteten Navigationssignalen ausgebildet sind. Unter einem Intertialnavigationssystem werden hierbei alle Komponenten verstanden, die zur relativen Positionsbestimmung eines Flugkörpers dienen, also beispielsweise auch Lagesensoren und barometrische Sensoren.
   Die Verarbeitungs- und Berechnungsmittel weisen insbesondere einen digitalen Signalprozessor auf, der derart programmiert ist, dass er Navigationssignaldaten aus den empfangenen Navigationssignalen rekonstruieren und dekodieren kann.
   In einer bevorzugten Ausführungsform weisen die Verarbeitungs- und Berechnungsmittel ferner eine zentrale Prozessoreinheit auf, die derart programmiert ist, dass sie aus den vom digitalen Signalprozessor erzeugten Navigationssignaldaten die absolute Position und Lage des Sensors unter Berücksichtigung der Positionsdaten von mindestens einer Pseudolit-Station berechnen kann. In diesem Fall sind die Algorithmen, die zur Positionsbestimmung verwendet werden und im Prinzip den Algorithmen zur Positionsbestimmung mittels Satellitennavigationssignalen entsprechen, im Wesentlichen in Software implementiert, die von der zentralen Prozessoreinheit ausgeführt wird. Es ist jedoch ebenso möglich, die Algorithmen in Hardware zu implementieren, beispielsweise um eine möglichst schnelle Positionsbestimmung zu erreichen.
   Die Verarbeitungs- und Berechnungsmittel können ferner einen Datenspeicher aufweisen, in dem Positionsdaten von mindestens einer Pseudolit-Station zusammen mit dem eindeutigen Kode der Pseudolit-Station gespeichert sind,
wobei die zentrale Prozessoreinheit derart programmiert ist, dass sie zu Navigationssignaldaten einer Pseudolit-Station aus dem Datenspeicher die zur Pseudolit-Station gehörigen Positionsdaten auslesen und zum Berechnen der absoluten Position und Lage des Sensors verwenden kann. In diesem Fall ist es im Prinzip nicht erforderlich, dass die Pseudolit-Stationen in ihren Navigationssignalen Positionsdaten mit übertragen. Im Prinzip reicht der eindeutige Kode einer bestimmten Pseudolit-Station aus, um im Sensor anhand der im Datenspeicher abgelegten Informationen die Positionen der Pseudolit-Station zu ermitteln und für die Positionsbestimmung zu verwenden. Wenn jedoch die Positionsdaten mit den Navigationssignalen übertragen werden, kann beispielsweise bei schlechtem oder gestörtem Signalempfang, bei dem lediglich die das Signal sendende Pseudolit-Station festgestellt werden kann, immer noch eine Positionsbestimmung erfolgen, da die entsprechenden Positionsdaten der Pseudolit-Station lokal im Sensor vorhanden sind.

Schließlich betrifft die Erfindung gemäß einer Ausführungsform ein Verfahren zur Positionsbestimmung eines Flugkörpers , insbesondere eines Raumflugkörpers, wobei
- mindestens eine, auf der Erdoberfläche befindliche Pseudolit-Station eines Bodensegments ein eindeutig die Pseudolit-Station identifizierbares Navigationssignal in Richtung des Weltraums aussendet, und
- mindestens ein im Flugkörper angeordneter Sensor eines Nutzersegments das Navigationssignal der mindestens einen Pseudolit-Station empfängt und seine absolute Position im Raum anhand des empfangenen Navigationssignals ermittelt.

Der Sensor kann beim Ermitteln seiner absoluten Position im Raum ferner zusätzlich mindestens ein Navigationssignal eines Satelliten verwenden.

Ferner kann der Sensor beim Ermitteln seiner absoluten Position im Raum zusätzlich Daten von einem Inertialnavigationssystem des Flugkörpers verwenden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet,

Die Zeichnungen zeigen in:
- Fig. 1: ein Ausführungsbeispiel einer Anordnung zur Positions- und Lagebestimmung einer Trägerrakete und deren Nutzlast gemäß der Erfindung;
- Fig.2: ein Ausführungsbeispiel einer geographischen Verteilung von Pseudolit-Stationen auf der Erde gemäß der Erfindung;
- Fig. 3: ein Blockschaltbild eines Ausführungsbeispiels einer Pseudolit-Station gemäß der Erfindung; und
- Fig. 4: ein Blockschaltbild eines Ausführungsbeispiels eines Positions- und Lagesensors des Nutzersegments der erfindungsgemäßen Anordnung zur Positionsbestimmung eines Flugobjekts.

Im Folgenden können gleiche und/oder funktional gleiche Elemente mit den gleichen Bezugszeichen versehen sein.

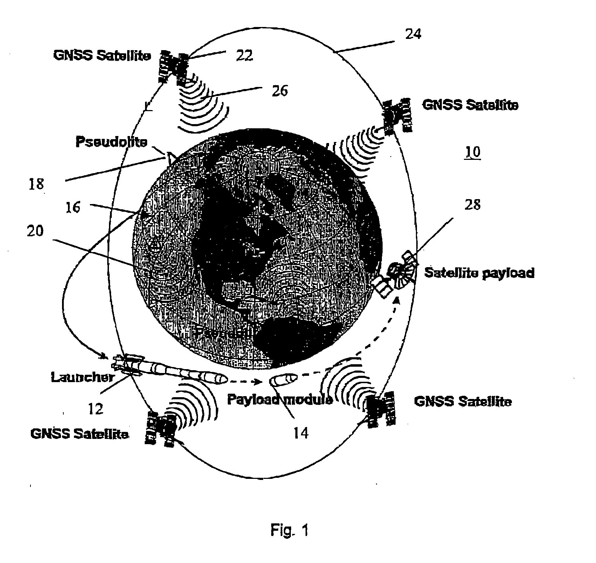

Fig. 1 zeigt eine Anordnung 10 zur Positions- und Lagebestimmung einer Trägerrakete 12 und deren Nutzlast 14, die ein Bodensegment 16 mit mehreren auf der Erdoberfläche an verschiedenen geographischen Orten angeordneten Pseudolit-Stationen 18 umfasst. Jede Pseudolit-Station 18 sendet ein eindeutig die Station kennzeichnendes Navigationssignal 20 (SIS: Signal in Space) in Richtung zum Weltraum aus. Ferner sind mehrere GNSS-Satelliten 22 dargestellt, welche die Erde auf einer Satellitenbahn 24 in einer Höhe von ca. 20000 km umrunden und Navigationssignale 26 aussenden, wie es bei Navigationssystemen üblich ist.

Die Position und Lage, insbesondere Höhe einer von der Erde gestarteten Trägerrakete 12, deren Nutzlastmodul 14 und Satelliten-Nutzlast 28 kann anhand der Navigationssignale 20 der Pseudolit-Stationen 18 und ggf. zusätzlich der Navigationssignale 26 von den GNSS-Satelliten 22 ermittelt werden. Die Trägerrakete 12, deren Nutzlastmodul 14 und Satelliten-Nutzlast 28 bilden ein Raumsegment der Vorrichtung 10 und weisen (nicht dargestellte) Empfangseinrichtungen für die verschiedenen Navigationssignale 20 und 26 und (ebenfalls nicht dargestellte) Auswerteinrichtungen für empfangene Navigativnssignale on-Board auf. Die Empfangs- und Auswerteeinrichtungen können ähnlich wie bekannte Satellitennavigationsgeräte aufgebaut sein, die anhand von Navigationssignalen die Position eines Objekt im Raum bestimmen können. Die Positions- und Lagebestimmung ist nicht auf eine Trägerrakete und deren Nutzlast beschränkt, sondern kann für jeden Flugkörper eingesetzt werden, insbesondere auch für Raketengeschosse und trans- und exoatmosphärische Flugkörper wie beispielsweise in sehr großen Höhen fliegenden Flugzeuge.

Zur Positions- und Lagebestimmung eines Flugkörpers kann es ausreichen, die Navigationssignale 20 der Pseudolit-Stationen 18 alleine auszuwerten. Typischerweise werden aber die Navigafionssignale 20 der Pseudolit-Stationen 18 dann zur Positions- und Lagebestimmung herangezogen, wenn die Navigationssignale 26 der GNSS-Satelliten 22, die in Richtung zur Erde ausgestrahlt werden, vom Flugkörper schlecht oder überhaupt nicht empfangen werden können, oder wenn zu wenige Navigationssignale 26 der GNSS-Satelliten 22 empfangen werden. Die anhand von den Navigationssignalen 20 und ggf. 26 ermittelten Positions- und Lagedaten eines Flugkörpers können auch mit den von einem Inertialnavigationssystem des Flugkörpers ermittelten Positions- und Lagedaten kombiniert werden, beispielsweise zur gegenseitigen Plausibilisierung der ermittelten Daten oder zur Verbesserung der Genauigkeit. Im Übrigen können die Navigationssignale 20 auch abhängig von der Installation nützlich sein, um die Satellitengeometrie zu verbessern, was in einem besseren DOP (dilution of precision)-Wert und schließlich einer genaueren Positionsbestimmung resultiert.

Die Struktur der Navigationssignale 20 der Pseudolit-Stationen 18 ähnelt der von Navigationssignalen 26 der GNSS-Satelliten 22 und umfasst die Aussendezeit und die genauen Ortskoordinaten einer aussendenden Pseudolit-Station 18. Die Pseudolit-Stationen 18 senden die Navigationssignale 20 mittels des Vielfachzugriffsverfahrens CDMA (code division multiple access) aus. Hierzu werden die auszusenden Signale mit einem (Spreiz-)Kode, insbesondere einem Gold- oder Gold-ähnlichen Kode über das zum Aussenden zur Verfügung stehende Frequenzband gespreizt. Die Navigationssignale 20 der Pseudolit-Stationen 18 können daher auch in denselben Frequenzbändern ausgesandt werden, in denen die Navigationssignale 26 der GNSS-Satelliten 22 übertragen werden. Eine Unterscheidung der Navigationssignale im Empfänger erfolgt dann anhand des zum Dekodieren erforderlichen (Spreiz)Kodes. Durch Erhöhen der Datenübertragungsrate von den Pseudolit-Stationen 18 können in den ausgesandten Navigationssignalen 20 auch differentielle Korrekturdaten übertragen werden, wodurch keine zusätzlichen Datenverbindungen für diese Korrekturdaten erforderlich sind.

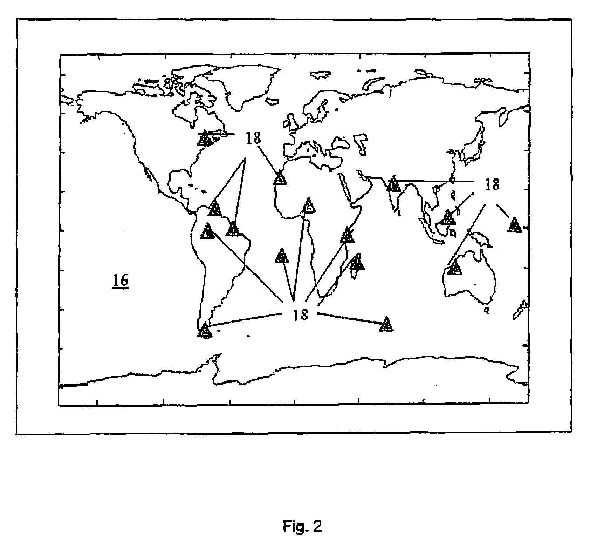

In Fig. 2 ist eine Verteilung bzw. Anordnung von Pseudolit-Stationen 18 eines Ausführungsbeispiels eines Bodensegments 16 auf der Erdoberfläche dargestellt, die insbesondere für die Positions- und Lagebestimmung von Trägerraketen und deren Nutzlast, wie in Fig. 1 gezeigt, geeignet ist Die Stationen 18 sind derart auf der Erdoberfläche verteilt, dass die Position und Lage einer Trägerrakete jederzeit entweder alleine anhand der von den Pseudolit-Stationen 18 ausgesandten Navigationssignale oder auch zusammen mit Satelliten-Navigationssignalen von GNSS oder auch GPS bestimmt werden kann. Die meisten Stationen 18 sind im Bereich des Äquators angeordnet, da damit ein optimaler Empfang der von den Stationen 18 ausgesandten Navigationssignale in einer Trägerrakete und deren Nutzlast gewährleistet ist.

Im Folgenden wird nun detailliert der Aufbau eines Ausführungsbeispiels einer Pseudolit-Station und eines Sensors gemäß der Erfindung erläutert.

Wie bereits oben angedeutet umfasst die Anordnung zur Positions- und Lagebestimmung gemäß der Erfindung ein Bodensegment mit einer oder mehreren Pseudolit-Stationen und ein Nutzersegment mit Empfangs- und Auswerteeinrichtungen von Navigationssignalen on-Board von Flugkörpern.

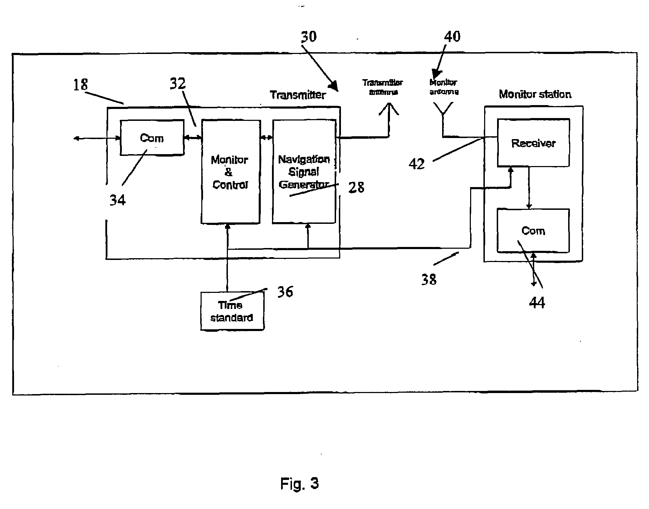

Der typische Aufbau einer Pseudolit-Station 18 des Bodensegments ist in Fig. 3 dargestellt. Kern der Station 18 ist der Navigationssignalgenerator 28, der zum Erzeugen von Navigationssignalen dient, die über eine Sendeantenne 30 der Pseudolit-Station 18 ausgesandt werden. Weiterhin sind eine Pseudolit-Kommunikationshard- und -software für die Steuerung und Überwachung in Form einer Steuerungs- und Überwachungseinheit 32 sowie eine Kommunikationseinheit 34 vorgesehen.

Der Navigationssignalsignalgenerator 28 ist ausgebildet, um GNSS-ähnliche Signale zu erzeugen, die mittels CDMA über die Sendeantenne 32 ausgesandt werden. Jede Pseudolit-Station 18 sendet hierbei eine charakteristische Kodesequenz aus, welche die Station eindeutig identifiziert und als Spreizkode für CMDA dient. Das Aussenden der Navigafionssignale wird von der Steuerungs- und Überwachungseinheit 32 gesteuert und überwacht, indem der Navigationssignalsignalgenerator 28 zum Aussenden von Navigationssignalen angesteuert wird.

Die ausgesandten Navigationssignale enthalten die exakte Uhrzeit des Aussendens und die Position einer Pseudolit-Station 18 in Form von Koordinaten. Die Koordinaten geben hierbei die präzise Position der Sendeantenne 30 an. Daher ist es erforderlich, deren genaue Position zu ermitteln und entweder in einem lokalen oder einem globalen Bezugssystem anzugeben.

Da die Erdkrümmung eine simultane Überwachung aller Pseudolit-Stationen 18 durch eine einzelne zentrale Master- und Monitor-Station verhindert, wird jede Pseudolit-Station 18 durch ihre eigene Monitorstation 38 überwacht. Die Monitorstation 38 umfasst eine Monitorantenne 40 und einen Empfänger 42, über die sie Navigationssignale von GNSS-Satelliten empfangen kann. Ferner weist sie eine Kommunikationseinheit 44 auf, die mit der Kommunikationseinheit 34 der Pseudolit-Station 18 kommunizieren kann. Die Monitorstationen 38 aller Pseudolit-Stationen 18 sind untereinander synchronisiert, da sie insbesondere die Zeitbasis für jede Pseudolit-Station 18 erzeugen. Eine derartige Synchronisation kann beispielsweise durch Benutzung von GNSS (common view) oder durch Zweiwege-Zeit-Transferverfahren erreicht werden, wofür die Monitorantenne 40 und der Empfänger 42 benötigt werden. Zusätzlich ist jede Pseudolit-Station 18 mit einem hochstabilen Referenzoszillator ausgestattet, der eine lokale Zeitbasis 36 bildet.

Die Genauigkeit der gemäß der Erfindung ermittelten Position und Lage eines Flugobjekts hängt auch von der Geometrie sichtbarer Pseudolit-Stationen 18 ab. Unter Geometrie wird hier insbesondere die örtliche Verteilung und geographische Anordnung von Pseudolit-Stationen 18 verstanden. Die Geometrie der Stationen 18 ist optimal, wenn sie so weit wie möglich voneinander entfernt angeordnet sind. Eine typische Geometrie von Pseudolit-Stationen 18 ist in Fig. 2 dargestellt. Die geographische Verteilung der Pseudolit-Stationen 18 ist hierbei derart gewählt, dass während jeder Flugphase eines Flugobjekts Navigationssignale von mindestens fünf Pseudolit-Stationen 18 empfangen werden können. Vorzugsweise sind die Pseudolit-Stationen 18 derart angeordnet, dass während kritischer Manöver wie beispielsweise beim Start einer Trägerrakete und beim Aussetzen der Nutzlast eine maximale Anzahl von Navigationssignalen der Pseudolit-Stationen 18 vom Flugobjekt empfangen werden kann. Beispielsweise kann hierfür die Anzahl und Dichte an Pseudolit-Stationen 18 im Bereich der Startrampe für die Trägerrakete erhöht werden.

Das Nutzersegment on-Board eines Flugobjekts, beispielsweise in einer Trägerrakete und in deren Nutzlast wird im Wesentlichen durch eine Art Positions- und Lagesensor gebildet, der folgende Subsysteme umfasst:
- eine einzelne Empfangsantenne oder eine Mehrfach-Gruppenantenne (multi antenna array; die Gruppenantenne für die Lagebestimmung umfasst in der Regel zwei oder vier Antennen) zum Empfangen der Funknavigationssignale von GNSS-Satelliten und Pseudolit-Stationen;
- einen Empfänger zum Empfang der Navigationssignale von GNSS-Satelliten und Pseudolit-Stationen; und
- eine zentrale Prozessoreinheit (CPU: central processing unit) zum Ausführen von einem Programm zum Berechnen der Position anhand der in den empfangenen Navigationssignalen enthaltenen Zeit- und Ortkoordinatendaten und der Lage basierend auf Code- und Phasenmessungen der über die Antenne zur Lagebestimmung empfangenen Navigationssignale.

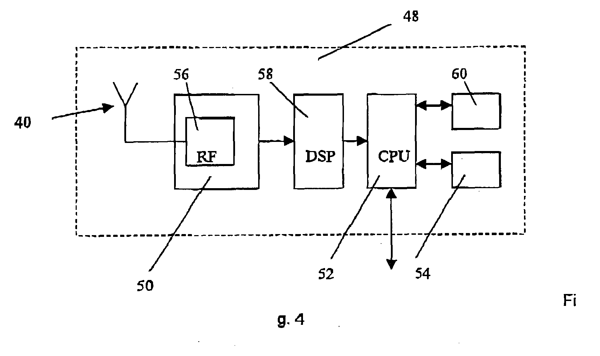

Fig. 4 zeigt einen Sensor 46 des Nutzersegments mit den oben erwähnten Einheiten Antenne 48, Empfänger 50, CPU 52 sowie einen Programmspeicher 54, in dem das Programm zur Positions- und Lagebestimmung gespeichert ist.

Die über die Antenne 48 empfangenen Signale werden über ein Hochfrequenz (HF)-Front End 56 des Empfängers 50 einem digitalen Signalprozessor (DSP) 58 zugeführt, der die Navigationssignaldaten aus dem Empfangsignal rekonstruiert und dekodiert. Die Ausgabe des DSP 58, welche auch die Code- und Phasenmessung umfasst, wird der CPU 52 zugeführt, die Lage und Position basierend auf den Daten der empfangenen GNSS- oder Pseudolit-Navigationssignalen berechnet.

Im Positions- und Lagesensor 46 können ferner in einem Datenspeicher 60 die Ephemeriden der GNSS-Satelliten und die Positionen der Pseudolit-Stationen gespeichert sein. Dann ist es nicht erforderlich, dass die Pseudolit-Stationen ihre Positionsdaten mit dem Navigationssignal aussenden. Soll jedoch der Datenspeicher 60 im Sensor 46 eingespart werden, sind die Positionsdaten in den Navigationssignalen der Pseudolit-Stationen zur Positionsbestimmung nötig.

### Bezugszeichen

- 10: Anordnung zur Positions- und Lagebestimmung einer Trägerrakete und deren Nutzlast
- 12: Trägerrakete
- 14: Nutzlast
- 16: Bodensegment
- 18: Pseudolit-Stationen des Bodensegments 16
- 20: Navigationssignal einer Pseudolit-Station 18
- 22: GNSS-Satellit
- 24: GNSS-Satellitenbahn im Orbit
- 26: Navigationssignal eines GNSS-Satelliten 22
- 28: Navigationssignalgenerator einer Pseudolit-Station 18
- 30: Sendeantenne einer Pseudolit-Station
- 32: Steuerungs- und Überwachungseinheit einer Pseudolit-Station 18
- 34: Kommunikationseinheit einer Pseudolit-Station 18
- 36: Zeitbasis für eine Pseudolit-Station 18
- 38: Monitorstation
- 40: Monitorantenne
- 42: Empfänger der Monitorstation 38
- 44: Kommunikationseinheit der Monitorstation 38
- 46: Position- und Lagesensor des Nutzersegments
- 48: Antenne
- 50: Empfänger
- 52: CPU
- 54: Programmspeicher
- 56: HF-Front-End
- 58: DSP
- 60: Datenspeicher

## Patentansprüche

1. Anordnung (10) zur Positions- und Lagebestimmung eines Flugkörpers (12, 14), insbesondere eines Raumflugkörpers umfassend
- ein Bodensegment (16), das mindestens eine, auf der Erdoberfläche befindliche Pseudolit-Station (18) aufweist, die ein eindeutig die Pseudolit-Station identifizierbares Navigelorissignal (20) in Richtung des Weltraums aussendet, und
- ein Nutzersegment, das mindestens einen im Flugkörper (12, 14) angeordneten Sensor (46) aufweist, der zum Empfangen des Navigationssignals (20) der mindestens einen Pseudolit-Station (18) und zum Ermitteln seiner absoluten Position und Lage im Raum anhand des empfangenen Navigationssignals (20) ausgebildet ist.

2. Anordnung nach Anspruch 1,
**dadurch gekennzeichnet, dass**
das Bodensegment (16) mehrere Pseudolit-Stationen (18) umfasst, die gemäß einer vorgegebenen Geometrie auf der Erdoberfläche derart angeordnet sind, dass während aller Phasen eines Flugs des Flugkörpers (12, 14) Navigationssignale von mindestens fünf unterschiedlichen Pseudolit-Stationen (18) empfangen werden können.

3. Anordnung nach Anspruch 2,
**dadurch gekennzeichnet, dass**
die Pseudolit-Stationen (18) ferner derart angeordnet sind, dass während des Starts des Flugkörpers (12, 14) von der Erdoberfläche Navigationssignale (20) einer maximalen Anzahl von Pseudolit-Stationen (14) empfangen werden können.

4. Pseudolit-Station (18) zur Verwendung in einer Anordnung nach einem der vorhergehenden Ansprüche, umfassend
- einen Signalgenerator (28), der zum Erzeugen eines eindeutig die Pseudolit-Station (18) identifizierbaren Navigationssignals (20) und zum Aussenden des Navigationssignals (20) mittels eines Codemultiplexverfahrens ausgebildet ist, und
- eine Sendeantenne (30) zum Aussenden des Codemultiplexsignals,
wobei der Signalgenerator (28) als Spreizkode einen der Pseudolit-Station (18) zugeordneten eindeutigen Kode verwendet.

5. Pseudolit-Station nach Anspruch 4,
**dadurch gekennzeichnet, dass**
eine Steuerungs- und Überwachungseinheit (32) vorgesehen ist, die zum Steuern der Navigationssignalerzeugung und zum Überwachen des Navigationssignalsaussendens in Übereinstimmung mit Daten einer Zeitreferenz (36) ausgebildet ist.

6. Pseudolit-Station nach Anspruch 5,
**dadurch gekennzeichnet, dass**
eine Monitorstation (38) zur Überwachung der Pseudolit-Station (18) vorgesehen ist, die zum Empfangen von Navigationssignalen (26) von Satelliten (22) und zum Erzeugen von Synchronisationssignalen für die Steuerungs- und Überwachungseinheit (32) der Pseudolit-Station (18) aus den empfangenen Navigationssignalen (26) ausgebildet ist.

7. Pseudolit-Station nach Anspruch 6,
**dadurch gekennzeichnet, dass**
die Monitorstation (38) ausgebildet ist, aus empfangenen Navigationssignalen (26) von Satelliten (22) Zeitinformationen zu extrahieren und für die Erzeugung der Synchronisationssignale zu verwenden.

8. Pseudolit-Station nach Anspruch 6 oder 7,
**dadurch gekennzeichnet, dass**
die Monitorstation (38) ausgebildet ist, mittels eines Zweiwege-Zeitübertragungsverfahren Zeitinformationen zu erhalten und für die Erzeugung der Synchronisationssignale zu verwenden.

9. Pseudolit-Station nach einem der Ansprüche 4 bis 8,
**dadurch gekennzeichnet, dass**
eine Pseudolit-Station (18) eine horhstabile Oszillatorreferenz als lokale Zeitbasis aufweist.

10. Sensor (46) zur Verwendung in einer Anordnung nach einem der Ansprüche 1 bis 3 umfassend
- mindestens eine Antenne (48) und mindestens einen Empfänger (50) zum Empfangen eines Navigationssignals (20) von mindestens einer Pseudolit-Station (18) und
- Verarbeitungs- und Berechnungsmittel (52, 54, 56, 58, 60) zum Verarbeiten des empfangenen Navigationssignals (20, 26) und Berechnen der absoluten Position und Lage des Sensors (46) aus dem verarbeiteten Navigationssignal (20, 26).

11. Sensor nach Anspruch 10,
**dadurch gekennzeichnet, dass**
die mindestens eine Antenne (48) und der mindestens eine Empfänger (50) zusätzlich zum Empfangen von Navigafionssignalen (26) von Satelliten (22) ausgebildet sind.

12. Sensor nach Anspruch 10 oder 11.
**dadurch gekennzeichnet, dass**
die Verarbeitungs- und Berechnungsmittel (52, 54, 56, 58, 60) zusätzlich zum Verarbeiten von Daten eines Inertialnavigationssystems eines Flugkörpers (12, 14) und Berücksichtigen der Daten des Inertialnavigationssystems beim Berechnen der absoluten Position und Lage des Sensors (46) aus den verarbeiteten Navigationssignalen (20, 26) ausgebildet sind,

13. Sensor nach einem der Ansprüche 10 bis 12,
**dadurch gekennzeichnet, dass**
die Verarbeitungs- und Berechnungsmittel einen digitalen Signalprozessor (58) aufweisen, der derart programmiert ist, dass er Navigationssignaldaten aus empfangenen Navigationssignalen (20, 26) rekonstruieren und dekodieren kann.

14. Sensor nach Anspruch 13,
**dadurch gekennzeichnet, dass**
die Verarbeitungs- und Berechnungsmittel ferner eine zentrale Prozessoreinheit (52) aufweisen, die derart programmiert ist, dass sie aus den vom digitalen Signalprozessor (58) erzeugten Navigationssignaldaten die absolute Position und Lage des Sensors (46) unter Berücksichtigung der Positionsdaten von mindestens einer Pseudolit-Station (18) berechnen kann.

15. Sensor nach Anspruch 14,
**dadurch gekennzeichnet, dass**
die Verarbeitungs- und Berechnungsmittel ferner einen Datenspeicher (60) aufweisen, in dem Positionsdaten von mindestens einer Pseudolit-Station (18) zusammen mit dem eindeutigen Kode der Pseudolit-Station (18) gespeichert sind, wobei die zentrale Prozessoreinheit (52) derart programmiert ist, dass sie zu Navigationssignaldaten einer Pseudolit-Station (18) aus dem Datenspeicher (60) die zur Pseudolit-Station (18) gehörigen Positionsdaten auslesen und zum Berechnen der absoluten Position und Lage des Sensors (46) verwenden kann.

16. Verfahren zur Positionsbestimmung eines Flugkörpers (12, 14), insbesondere eines Raumflugkörpers, wobei
- mindestens eine, auf der Erdoberfläche befindliche Pseudolit-Station (18) eines Bodensegments (16) ein eindeutig die Pseudolit-Station identifizierbares Navigationssignal (20) in Richtung des Weltraums aussendet, und
- mindestens ein im Flugkörper (12, 14) angeordneter Sensor (46) eines Nutzersegments das Navigationssignal (20) der mindestens eine Pseudolit-Station (18) empfängt und seine absolute Position und Lage im Raum anhand des empfangenen Navigationssignals (20) ermittelt.

17. Verfahren nach Anspruch 16,
**dadurch gekennzeichnet, dass**
der Sensor (46) beim Ermitteln seiner absoluten Position und Lage im Raum ferner zusätzlich mindestens ein Navigationssignal (26) eines Satelliten (22) verwendet.

18. Verfahren nach Anspruch 16 oder 17,
**dadurch gekennzeichnet, dass**
der Sensor (46) beim Ermitteln seiner absoluten Position und Lage im Raum ferner zusätzlich Daten von einem Inertialnavigationssystem des Flugkörpers (12, 14) verwendet.
